# EUROPEAN PATENT APPLICATION

(11) **EP 2 679 862 A1**
(43) Date of publication of application: **01.01.2014**
(21) Application number: 12750030.4
(22) Date of filing: 03.02.2012
(51) Int. Cl.: F16H 7/08

(54) **CHAIN GUIDE AND CHAIN TENSIONER DEVICE**

(30) Priority: 23.02.2011 JP 2011037510
(71) Applicant: NTN Corporation, Osaka-shi, Osaka 550-0003 (JP)
(72) Inventor: KATO Akio, Iwata-shi Shizuoka 438-0037 (JP); YAMASHITA Takahiro, Iwata-shi Shizuoka 438-0037 (JP); ABE Katsufumi, Iwata-shi Shizuoka 438-0037 (JP)
(74) Representative: Grünecker, Kinkeldey, Stockmair & Schwanhäusser
(86) International application number: PCT/JP2012/052452
(87) International publication number: WO 2012/114846

(57) **Abstract**

An object of the present invention is to provide a chain guide which has low noise and low vibration even when being brought into contact with a chain running at high speed, and to provide a chain tensioner device using the chain guide. A chain guide base 9 provided along the running direction of a chain 1 is integrally attached to a tensioner plunger 7 that presses the chain guide base 9 against the chain side so as to increase the weight of the chain guide 5 itself to reduce vibration.

## Description

### Technical Field

The present invention relates to a chain guide which presses an endlessly connected chain and thereby gives tension to the chain so as to prevent the slacking of the chain, and also relates to a chain tensioner device.

### Background Art

A chain tensioner device is provided with chain guides which are brought into contact with middle portions of a chain endlessly provided around drive and driven sprockets and running at high speed, and is configured to press at least one of the chain guides against the chain in the direction substantially perpendicular to the running direction of the chain, and to thereby apply tension to the chain so as to prevent the chain from being slacked. The chain tensioner device is used for a timing chain, or the like, of a valve driving device of an engine.

The chain guide is configured to guide the chain while being in contact with the chain, and hence sliding resistance is generated due to friction between the chain guide and the chain, causing a problem of an increased noise and mechanical loss.

Known techniques for suppressing the noise and mechanical loss of the chain guide include those described in Patent Literature 1 and Patent Literature 2. The chain guides described in Patent Literature 1 and Patent Literature 2 are formed in a curved shape along the running direction of the chain, in which rollers are arranged at a sliding-surface portion which is brought into contact with the chain, and the rollers are rolled by being pressed against the chain running at high speed, and thereby the sliding resistance is reduced.

### Citation List

### Patent Literature

Patent Literature 1: Japanese Patent Laid-Open No. H09-236157 A
Patent Literature 2: Japanese Patent Laid-Open No. 2010-180900 A

### Summary of Invention

### Technical Problem

Meanwhile, the chain moves on the chain guide at high speed while vibrating, and hence the vibration is transmitted to an engine via the chain guide, which results in a problem that the sound level of the vibration becomes high.

As a countermeasure to reduce vibration transmitted to the chain guide, it is conceivable to increase the weight of the chain guide so as to increase the inertia force.

However, the increase in the weight of the chain guide itself results in an increase in the weight of the system as a whole, which is not desirable from a viewpoint of the improvement in fuel economy.

Accordingly, in order to solve the above described problems, an object of the present invention is to obtain a chain guide having large inertia force and little vibration, without increasing the weight of a system as a whole, and to obtain a chain tensioner device using the chain guide.

### Solution to Problem

In order to solve the above-described problems, according to the present invention, a tensioner plunger is integrally attached to a chain guide base in such a manner that the inertia force of the chain guide is increased and vibration of a chain guide is reduced without increasing the weight of a system as a whole.

A plurality of rollers, which are brought into contact with an endlessly connected chain, can be arranged on the chain guide base.

The roller may be composed of a support shaft, opposite ends of which are supported by the chain guide base, and a roller bearing which includes an outer ring provided on the outer peripheral surface of the support shaft. Further, the roller may include an iron outer ring which covers the outer periphery of the outer ring and which is brought into contact with the chain.

As the roller bearing, it is possible to use a roller bearing composed of a steel outer ring having inward-extending flange sections at opposite ends thereof, and a roller provided with a retainer and incorporated in the outer ring.

The steel outer ring is formed by press-forming but may also be formed by cut-forming.

As for the hardness of the iron outer ring, it is preferred that an outer ring having hardness higher than the hardness of the chain is used so as to make it difficult for the outer ring to wear even when the outer ring is brought into contact with the chain running at high speed.

As the material of the iron outer ring, it is preferred to use a material, such as SUJ2 and SCM, which can be subjected to hardening treatment.

It is preferred that the iron outer ring has a thickness of 1 mm or more in order to prevent the deformation thereof and to improve the mechanical strength thereof.

It is desirable that the iron outer ring has a generating line shape of a barrel shape or a straight shape in order to reduce sliding resistance against the chain.

It is preferred that minute depressions and projections are formed on the surface of the iron outer ring, in order to improve the retaining performance of lubricating oil.

Further, as hardening treatment, nitriding treatment may be applied to the surface of the iron outer ring.

In order to reduce vibration and to achieve silence, it is desirable that the roundness of the iron outer ring is 20 µm or less.

The chain guide according to the present invention may be a chain tensioner device that is arranged at a middle portion of the endlessly connected chain to give tension to the chain by using a tensioner plunger integrally attached to the chain guide base.

### Advantageous Effects of Invention

In the chain guide according to the present invention, the tensioner plunger is integrally attached to the chain guide base, and hence the weight of the chain guide is increased by the weight of the tensioner plunger. Therefore, the inertia force of the chain guide is increased in correspondence with the increase in the weight, and thereby the vibration of the chain guide is reduced.
Even when the weight of the chain guide as a whole is increased, the weight of the vehicle as a whole is not changed as compared with the case where the tensioner plunger is arranged on the engine side, and hence the fuel economy is not deteriorated.

### Brief Description of Drawings

Fig. 1 is a perspective view showing an embodiment of a chain guide according to the present invention.
Fig. 2 is a plan view of the chain guide of Fig. 1 viewed from the chain side.
Fig. 3 is a front view of the chain guide of Fig. 1.
Fig. 4 is a plan view showing a state where rollers are removed from the chain guide of Fig. 1.
Fig. 5 is a sectional view taken in line A-A in Fig. 4.
Fig. 6 is a partially enlarged view of Fig. 5.
Fig. 7 is a transverse sectional view showing an embodiment of a chain guide according to the present invention.
Fig. 8 is a transverse sectional view showing an embodiment of the chain guide according to the present invention.
Fig. 9 is a transverse sectional view showing another embodiment of the chain guide according to the present invention.
Fig. 10 is a front view showing an example of a chain tensioner device using the chain guide according to the present invention.

### Description of Embodiments

Embodiments according to the present invention will be described in detail with reference to the accompanying drawings. Note that components, which are the same or equivalent to each other, are denoted by the same reference numeral or character in the drawings, and the description thereof is not repeated to avoid duplication of description.

A chain guide according to an embodiment of the present invention is used, for example, for giving tension to a timing chain of an engine valve drive system.

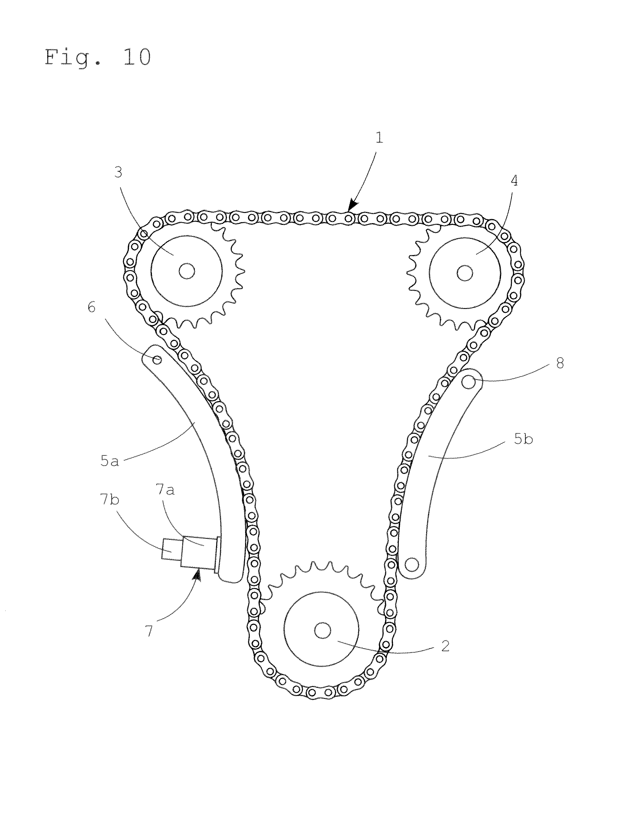

As shown in Fig. 10, a timing chain 1 is endlessly wound around a crank sprocket 2 attached to a crankshaft, a first cam sprocket 3 attached to a first cam shaft of a valve train, and a second cam sprocket 4 attached to a second cam shaft.

A first chain guide 5a and a second chain guide 5b are respectively arranged on the timing chain 1 between the crank sprocket 2 and the first cam sprocket 3, and on the timing chain 1 between the crank sprocket 2 and the second cam sprocket 4 so as to prevent the timing chain 1 from being slackened.

The first chain guide 5a is configured such that one longitudinal end side thereof is supported by a rotary shaft 6 so as to be rotatable with respect to an engine, and such that the other longitudinal end side thereof is rocked by a tensioner plunger 7 so as to give tension to the timing chain 1.

The second chain guide 5b, whose opposite longitudinal ends are fixed by mounting shafts 8 with respect to the engine, guides the tensioned timing chain 1 so that the timing chain 1 is not slackened.

The first chain guide 5a and the second chain guide 5b are different from each other only in that, while the first chain guide 5a is rocked by the tensioner plunger 7 with respect to the engine, the second chain guide 5b is not rocked and fixed with respect to the engine, and hence have the same basic structure for guiding the timing chain 1. Note that the chain guides 5a and 5b are also referred to as a chain lever.

The chain guide 5a is configured such that a tensioner plunger 7 is integrally attached to a guide base 9 formed in a curved shape along the timing chain 1.

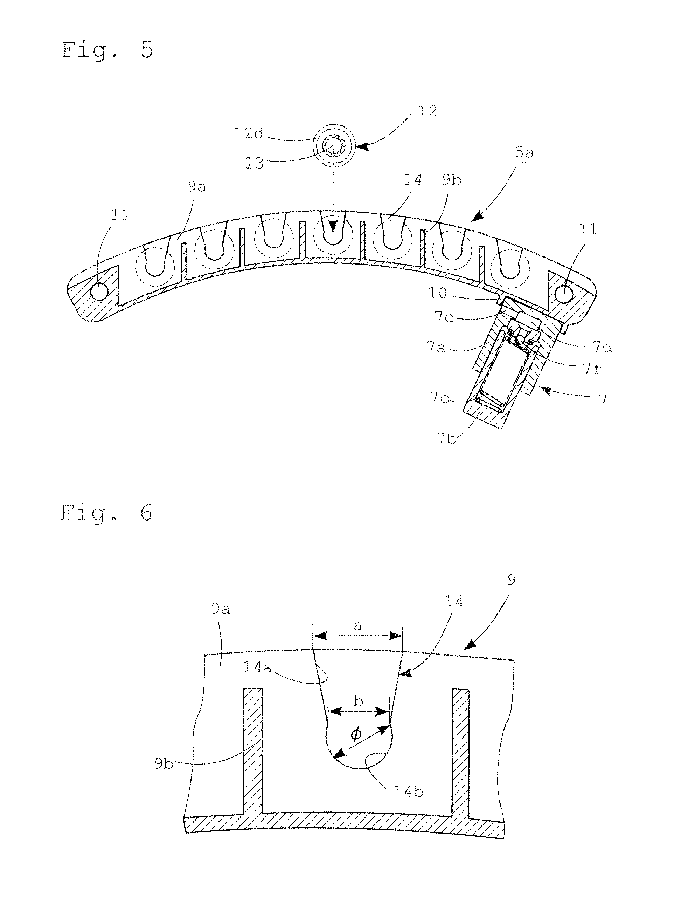

As shown in Fig. 5, the tensioner plunger 7 includes a cylinder chamber 7a, a piston 7b which is provided slidably in the cylinder chamber 7a, and a return spring 7c which is inserted into the piston 7b and which presses the piston 7b in the outer direction.

The cylinder chamber 7a is provided therein with a pressure chamber 7d which is located on the depth side of the piston 7b, an oil supply passage 7e which supplies a hydraulic fluid to the pressure chamber 7d, and a check valve 7f which prevents reverse flow of the hydraulic fluid.

As a method for fixing the tensioner plunger 7 to the chain guide base 9, it is possible to adopt a bonding method, a screw connection method, and the like, in addition to a method in which an annular fixing step section 10 configured to be fitted to the cylinder chamber 7a is provided on the bottom surface of the guide base 9, and in which the cylinder chamber 7a is press-fitted into the fixing step section 10.

When the guide base 9 is formed, the cylinder chamber 7a may be attached to the guide base 9 by insertion molding.

The chain guide base 9 is composed of a pair of side plate members 9a, and pillar members 9b connecting the side plate members 9a.

Through holes 11 are respectively provided at opposite longitudinal ends of each of the side plate members 9a. A shaft (not shown) is inserted into the through hole 11, so as to be fixed to, for example, an inner wall of an engine cover.

One longitudinal end side of the first chain guide 5a is supported by the rotary shaft 6 so as to be rotatable with respect to the engine, and the other longitudinal end side thereof is rocked by the tensioner plunger 7 to adjust tension of the timing chain 1.

The pair of side plate members 9a have a predetermined interval therebetween in the width direction, and the plurality of rollers 12 which are brought into contact with the timing chain 1 are arrayed between the side plate members 9a. The rollers 12 may be arrayed at a uniform pitch along the side plate member 9a having a curved shape, or the pitches between the rollers 12 may be changed so that more of the rollers 12 are arranged on the entrance side in the running direction of the timing chain 1.

Support recesses 14, which support opposite ends of a support shaft 13 of the roller 12, are respectively provided in the mutually facing wall surfaces of the side plate members 9a.

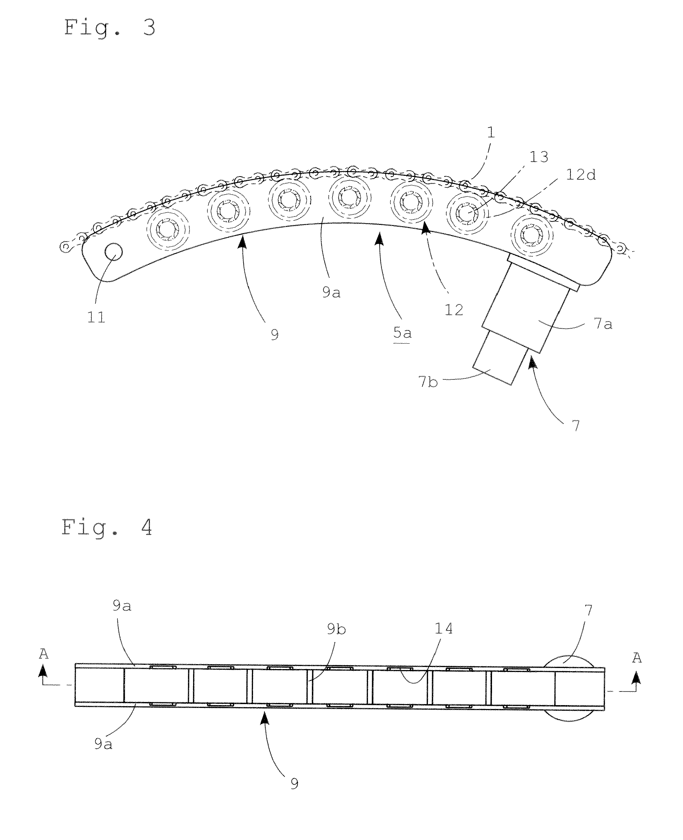

As shown in Fig. 4, Fig. 5 and Fig. 6, each of the support recesses 14 is composed of an insertion recess 14a having an opening in the side-plate-member end surface on the side of the timing chain 1, and a fixing recess 14b connected to the insertion recess 14a and having a circular arc shape into which the end portion of the support shaft 13 is fitted. Each of opposite ends of the support shaft 13 of the roller 12 is inserted from the insertion recess 14a into the fixing recess 14b, so as to be supported by each of the side plate members 9a.

As shown in Fig. 5, a plurality of the support recesses 14 are arrayed along the curved shape of the side plate member 9a, and the pillar member 9b is arranged between the support recesses 14.

As shown in the enlarged view of Fig. 6, the insertion recess 14a has a wide opening section a and is formed in a tapered shape, the width of which is gradually reduced from the opening section a to the position of the fixing recess 14b. Further, the width dimension of an insertion port b, located at the position at which the insertion recess 14a is connected to the fixing recess 14b, is smaller than the diameter φ of the fixing recess 14b having the circular arc shape.

The fixing recess 14b having the circular arc shape is formed to have the diameter φ smaller than the diameter of the support shaft 13 so that the support shaft 13 is press-fitted into the fixing recess 14b.

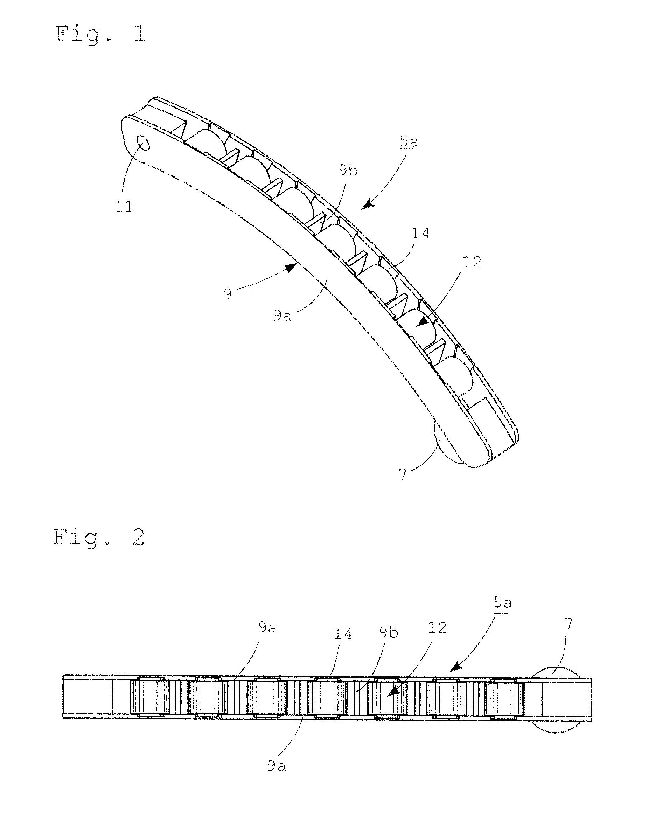

Further, as shown in Fig. 1 and Fig. 2, the support recess 14 is formed in the side plate member 9a in a non-penetrating state. Thereby, the shaft direction movement of the support shaft 13 inserted into the support recess 14 is regulated.

In the present embodiment, the side plate member 9a and the pillar member 9b are formed integrally by resin molding using, for example, polyamide (PA) 46 or polyamide (PA) 66 which are polymers obtained by polycondensation of diaminobutane and adipic acid. Further, it is possible to use a material obtained by combining glass fiber or carbon fiber with PA46 or PA66 in order to increase the mechanical strength.

When the side plate member 9a and the pillar member 9b are formed of resin, the weight of the guide base 9 can be reduced. Further, as the resin which forms the side plate member 9a and the pillar member 9b, resin having high heat conductivity can also be used for dissipating the frictional heat.

Note that, other than resin, the side plate member 9a and the pillar member 9b can also be formed, for example, by casting using a light metal, such as aluminum and magnesium. In this case, it is desirable that the side plate member 9a and the pillar member 9b are integrated with a tensioner plan jack.

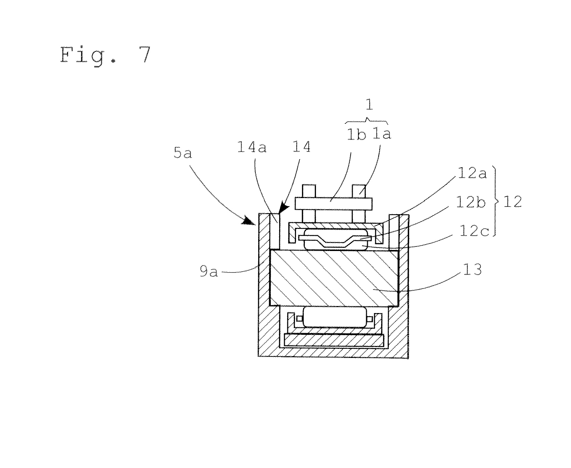

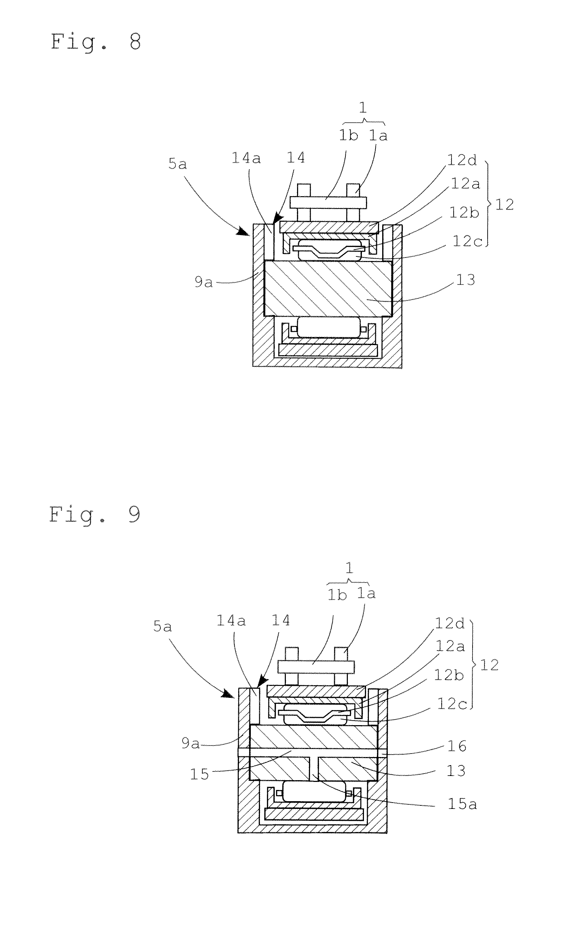

The roller 12 may be composed of the support shaft 13 and a roller bearing having a steel outer ring 12a as shown in Fig. 7, or may also be configured such that, as shown in Fig. 8, an iron outer ring 12d which is brought into contact with the timing chain 1 is arranged to cover the outer peripheral surface of the steel outer ring 12a.

The roller bearing is a radial roller bearing composed of the steel outer ring 12a having inward-extending flange sections at opposite ends thereof, and a roller 12c provided with a retainer 12b and incorporated in the steel outer ring 12a.

The outer ring 12a can be formed by press-forming or cut-forming.

When the outer ring 12a is formed by press forming, it is preferred that, after the retainer 12b and the roller 12c are incorporated into the outer ring 12a, the inward-extending flange sections are respectively formed at opposite ends of the outer ring 12a by edge bending processing, and that the outer ring 12a is then heat treated after the assembly.

Further, when the hardness of the outer ring 12a or the iron outer ring 12d is set higher than the hardness of the timing chain 1, the wear of the outer ring 12a or the iron outer ring 12d can be prevented.

As a material of the outer ring 12a or the iron outer ring 12d, a material, such as SUJ2 and SCM, which can be subjected to hardening treatment by heat treatment, is used.

In order to improve the retaining performance of lubricating oil, minute depressions and projections may be formed on the surface of the outer ring 12a or the iron outer ring 12d.

Further, the surface of the outer ring 12a or the iron outer ring 12d may be subjected to nitriding treatment.

In order to reduce contact resistance with the timing chain 1, it is desirable that the surface of the outer ring 12a or the iron outer ring 12d has a generating line shape of a barrel shape or a straight shape.

In order to reduce vibration and to achieve silence, it is desirable that the roundness of the outer ring 12a or the iron outer ring 12d is 20 µm or less.

Further, from a viewpoint of mechanical strength, it is preferred that the thickness of the outer ring 12a or the iron outer ring 12d is 1 mm or more.

The rollers 12c are held by the retainers 12b in the circumferential direction at predetermined intervals therebetween. As the retainer 12b, a V-shaped retainer having a V-shaped pillar section is used. When the retainer 12b is used, it is possible to prevent the skewing of the roller 12c and to prevent the end surface of the roller 12c from being brought into direct contact with the flange section of the outer ring 12a. Further, it is possible to prevent the wear of the side plate member 9a. Note that the roller bearing having a roller structure without using the retainer 12b may also be adopted.

Next, in order to attach the roller 12 to the side plate members 9a facing each other, the roller 12 into which the support shaft 13 is fitted is first prepared as shown in Fig. 5. Further, each of opposite ends of the support shaft 13 of the roller 12 is arranged to face the insertion recess 14a of the support recess formed in each of the mutually facing wall surfaces of the side plate members 9a, and is then dropped into the insertion recess 14a, so as to be inserted into the fixing recess 14b from the insertion recess 14a. In the present embodiment, the opening section a is formed to be wide, and the insertion recess 14a is formed to have a tapered shape. Therefore, when the support shaft 13 is inserted, the support shaft 13 can be easily guided from the opening section a to the circular arc-shaped fixing recess 14b through the insertion port b.

In the above-described embodiment, the diameter φ of the circular arc-shaped fixing recess 14b is formed to be smaller than the diameter of the support shaft 13, and hence the support shaft 13 is press-fitted and attached to the fixing recess 14b. As a result, it is possible to suppress the rotation of the support shaft 13. In addition, the width of the insertion port b connected to the fixing recess 14b is formed to be smaller than the diameter φ of the circular arc-shaped fixing recess 14b, and hence the insertion port b performs a function of preventing the coming-off of the support shaft 13. Further, the support recess 14 is formed so as not to penetrate the side plate member 9a, and hence the support shaft 13 inserted into the support recess 14 can be prevented from moving in the shaft direction.

In the state where the support shafts 13 of the roller 12 are respectively fitted into the support recesses 14 of the mutually facing side plate members 9a, the outer periphery surface of the roller 12 is lower than the end surface of the side plate member 9a as shown in Fig. 1, Fig. 3, Fig. 4, Fig 7 and Fig. 8. Thereby, the timing chain 1 is guided between the mutually facing wall surfaces of the side plate members 9a while being brought into contact with the iron outer ring 12d, so that the running timing chain 1 is prevented from coming off from the mutually facing wall surfaces of the side plate members 9a.

Further, it is desirable that each height of the end surface of the side plate member 9a and the roller 12 is lower than the position of a connection pin 1b mutually connecting plates 1a constituting the timing chain 1 as shown in Fig. 7 or Fig. 8. When each height of the end surface of the side plate member 9a and the roller 12 is higher than the position of the connection pin 1b mutually connecting the plates 1a constituting the timing chain 1, the connection pin 1b is brought into contact with the mutually facing wall surfaces of the side plate members 9a, and hence such configuration is not preferred.

Next, Fig. 9 is a transverse sectional view showing a chain guide 5a according to another embodiment of the present invention. In this embodiment, components common to those of the above-described embodiments are denoted by the same reference numerals and reference characters, and the description thereof is omitted, and only different portions are described. In this embodiment, as shown in Fig. 9, an oil hole 15 is provided at the center portion of the support shaft 13, and a discharge hole 15a for discharging oil is provided at a position opposite to the timing chain 1. Further, a hole 16 connected to the oil hole 15 is provided in the side plate member 9a. When the oil hole 15 is provided in this way, it is possible to supply oil to the inside of the bearing. Further, it is also possible to dissipate heat. It is preferred that the discharge hole 15a of the oil hole 15 is formed in the direction opposite to the timing chain 1 as described above. Thereby, oil is smoothly supplied to the inside of the bearing. Further, when the oil hole 15 is provided, the support shaft 13 is formed in a hollow shape, so that the weight of the chain guide 5 is reduced.

Further, in addition to the engine timing chain, the chain guide 5a according to each of the embodiments of the present invention can give tension to various driving chains, and can also reduce mechanical loss.

Further, as shown in Fig. 10, a chain tensioner device using the chain guide 5a according to the present invention is composed of the first chain guide 5a having one end provided with the through hole 11 into which the rotary shaft 6 is inserted, and having the other end side which is rocked by the tensioner plunger 7, and the second chain guide 5b having opposite ends which are respectively fixed by the mounting shafts 8 with respect to the engine. With the chain tensioner device, the mechanical loss and weight of the engine timing chain are reduced, so that the fuel consumption rate can be improved.

Note that the timing chain 1 can be used for any of a roller chain and a silent chain.

Further, in the above embodiments, an example is shown in which the side plate member 9a and the pillar member 9b are formed integrally with each other, but each of the side plate member 9a and the pillar member 9b may be formed as a separated body.

Further, in the above embodiments, an example is shown, in which a chain guide composed of arraying a plurality of rollers is used, but a chain guide, in which no roller is used, may be integrally attached to a tensioner plunger as described in the prior art of Patent Literature 1.

Further, in the above embodiments, a hydraulic tensioner plunger is described, but a mechanical tensioner plunger using a screw or a spring may also be integrally attached to the chain guide.

### Industrial Applicability

The chain guide according to the present invention is effectively used in a mechanism which gives tension to a driving chain of an engine, and the like.

### Reference Signs List

- 1: Timing chain
- 2: Crank sprocket
- 3: First cam sprocket
- 4: Second cam sprocket
- 5a: First chain guide
- 5b: Second chain guide
- 6: Rotary shaft
- 7: Tensioner plunger
- 7a: Cylinder chamber
- 7b: Piston
- 7c: Return spring
- 7d: Pressure chamber
- 7e: Oil supply passage
- 7f: Check valve
- 8: Mounting shaft
- 9: Chain guide base
- 9a: Side plate member
- 9b: Pillar member
- 10: Fixing step section
- 11: Through hole
- 12: Roller
- 12a: Outer ring
- 12b: Retainer
- 12c: Roller
- 12d: Iron outer ring
- 13: Support shaft
- 14: Support recess
- 14a: Insertion recess
- 14b: Fixing recess
- 15: Oil hole
- 15a: Discharge hole
- 16: Hole

## Claims

1. A chain guide comprising a chain guide base provided along the running direction of a chain, wherein a tensioner plunger which presses the chain guide base against the chain side is integrally attached to the chain guide base.

2. The chain guide according to claim 1, wherein a plurality of rollers, which are brought into contact with the endlessly connected chain, are arranged in the chain guide base.

3. The chain guide according to claim 1 or claim 2, wherein the roller is composed of a support shaft, opposite ends of which are supported by the chain guide base, and a roller bearing which includes an outer ring provided on the outer peripheral surface of the support shaft.

4. The chain guide according to claim 3, wherein the outer periphery of the outer ring is covered by an iron outer ring which is brought into contact with the chain.

5. The chain guide according to claim 3 or claim 4, wherein the roller bearing is composed of a steel outer ring having inward-extending flange sections at opposite ends thereof, and a roller provided with a retainer and incorporated in the outer ring.

6. The chain guide according to any of claim 3 to claim 5, wherein the steel outer ring is formed by press-forming.

7. The chain guide according to any of claim 3 to claim 5, wherein the steel outer ring is formed by cut-forming.

8. The chain guide according to any of claim 3 to claim 7, wherein the hardness of the outer ring or the hardness of the iron outer ring is higher than the hardness of the chain.

9. The chain guide according to any of claim 3 to claim 8, wherein the outer ring or the iron outer ring has a generating line shape of a barrel shape or a straight shape.

10. The chain guide according to any of claim 3 to claim 9, wherein minute depressions and projections are formed on the surface of the outer ring or the iron outer ring in order to improve the retaining performance of lubricating oil.

11. The chain guide according to any of claim 3 to claim 10, wherein the outer ring or the iron outer ring has a thickness of 1 mm or more.

12. The chain guide according to any of claim 3 to claim 11, wherein the surface of the outer ring or the iron outer ring is subjected to hardening treatment.

13. The chain guide according to claim 12, wherein the hardening treatment of the surface of the outer ring or the iron outer rings is nitriding treatment.

14. The chain guide according to any of claim 3 to claim 13, wherein the roundness of the outer ring or the iron outer ring is 20 µm or less.

15. A chain tensioner device wherein the chain guide according to any of claim 1 to claim 14 is arranged at a middle portion of an endlessly connected chain.
